# EUROPEAN PATENT SPECIFICATION

(11) **EP 0 552 795 B1**
(45) Date of publication and mention of the grant of the patent: **18.03.1998**
(21) Application number: 93100956.7
(22) Date of filing: 22.01.1993
(51) Int. Cl.: C09D 4/06, C09D 4/00

(54) **Ultraviolet curable resin composition with excellent adhesion**
Mittels Ultraviolettstrahlung härtbare Harzzusammensetzung mit ausgezeichnetem Haftvermögen
Composition de résine durcissable par rayonnement ulraviolet présentant une excellente adhérence

(30) Priority: 23.01.1992 JP 9942/92
(43) Date of publication of application: 28.07.1993
(73) Proprietor: Ajinomoto Co., Inc., Tokyo 104 (JP)
(72) Inventor: Sugiyama, Tomoki, c/o Central Research, Kawasaki-ku, Kawasaki-shi, Kanagawa-ken (JP); Koto, Hiroyasu, c/o Central Research, Kawasaki-ku, Kawasaki-shi, Kanagawa-ken (JP)
(74) Representative: Strehl Schübel-Hopf Groening & Partner

(56) References cited:
- EP-A- 0 112 005
- EP-A- 0 113 409
- EP-A- 0 119 017
- EP-A- 0 246 467
- DATABASE WPIL Section Ch, Week 8607, 9 April 1986, Derwent Publications Ltd., London, GB; Class A, Page A537, AN 86-045878/07 & JP-A-61 000 279 (MITSUBISHI RAYON) 6 January 1986

## Description

### Field of the Invention

The present invention relates to an ultraviolet curable resin composition with excellent adhesion to substrates and excellent curing properties.

### Description of the Prior Art

Ultraviolet curable resins show many advantages including curing at normal temperatures, rapid hardening with low energy, no need for solvents, etc., and recent years have seen a rapid increase in their use as paints, inks, etc. Particularly, their ability to cure at normal temperatures in a short length of time makes them ideal materials as paints for the coating of plastic surfaces.

However, because of generally poor adhesion of ultraviolet curable resins to plastic, it is necessary to perform some pre-treatment of the substrate surface, prior to coating (Survey of Plastic Coating Techniques / Survey of Plastic Coating Techniques of the Materials Technology Research Association, Editing Committee's Edition, P.417). In particular, no ultraviolet curable resin exists having adequate adhesion to polyester and curability, etc., necessitating pre-treatment of such substrates. The pre-treatment methods include, for example, corona electric discharge processing, flame treatment, treatment with chemicals such as acids, etc., methods of direct modification of the substrate surface, and application of primers to form surfaces to which paints are highly adhesive. However, the effects of corona electric discharge and other treatment methods are limited both time with respect to and performance. Also, the method employing primer application effectively improves adhesion, and is generally used for poor-adhesion substrates, but this also involves more steps, thus decreasing the operating efficiency and raising costs.

A photopolymerizable composition comprising the reaction product of an α,β-ethylenically unsaturated carboxylic acid with an epoxy resin, a phenoxy resin, a thickening agent, a polyethylenically unsaturated compound and a photoinitiator is known from EP-A-0 113 409. According to one embodiment the epoxy resin in the composition may be replaced by an epoxidized novolak.

EP-A-0 246 467 relates to a photosensitive resin composition suitable as a material for use as a solder resist or plating resist on printed circuit boards, which comprises a diallyl phthalate resin, a first esterified resin which is a reaction product of a cresol novolak type epoxy resin and an ethylenically unsaturated carboxylic acid and a second esterified resin which is a reaction product of a phenol and/or cresol novolak type epoxy resin and an ethylenically unsaturated carboxylic acid.

EP-A-0 112 005 discloses a coating composition which comprises at least one urethane acrylate or methacrylate, an acrylate or methacrylate compound containing an allylic group, a non-allylic acrylate or methacrylate as a diluent, a photoinitiator and a metal-drier.

The present invention aims to provide an ultraviolet curable resin composition which reduces or eliminates pre-treatment for the coating of plastic substrate surfaces, in cases in which such pre-treatment has heretofore been required.

### Summary of the Invention

The present invention makes possible an improvement in adhesion to plastic substrates with no loss of properties of the original resin, by providing an ultraviolet curable resin composition characterized by incorporating (a) 100 parts by weight of a resin composition which undergoes radical polymerization under ultraviolet light to form a cured substance said composition (a) comprising polybutadiene (meth)acrylate and a polymerization initiator, and (b) 0.5 - 20 parts by weight of a carboxylic acid vinyl ester compound having at least 2 ethylenically unsaturated double bonds.

The polymerization initiator may be arbitrarily selected. Examples thereof include chloroacetophenone, 4-t-butyl-trichloroacetophenone, diethoxyacetophenone, 1-phenyl-2-hydroxy-2-methylpropane-1-one, 1-(4-isopropylphenyI)-2-hydroxy-2-methylpropane-1-one, 2(hydroxyethoxy) phenyl (2-hydroxy-2-propyl) ketone, 1-hydroxycyclohexyl phenyl ketone, 2-methyl-1-(4-methylthiophenyl)-2-morpholino-propane-1-on, benzoin, benzoin methyl ether, benzoin ethyl ether, benzoin isopropyl ether, benzoin isobutyl ether, benzoin isopropyl ether, benzoin isobutyl ether, benzyl dimethyl ketal, benzophenone, benzoylbenzoic acid, methyl benzoyl benzoate, 4-phenylbenzophenone, hydroxybenzophenone, benzophenone acrylide, 4-benzoyl-4'-methyldiphenyl sulfide, 3, 3'-dimethyl-4-methoxybenzophenone, methyl O-benzoylbenzoate, xanthone, thioxanthone, anthraquinone, 2-chlorothioxanthone, 2-methylthioxanthone, 2,4-dimethylthioxanthone, 2-isopropylthioxanthone, 2,4-dichlorothioxanthone, 2,4-diethylthioxanthone, 2,4-diisopropylthioxantone, O-acyl-α-oxyimino ketone, 1-phenyl-1,2-propanediol-2-O-benzoyloxime, 2,4,6-trimethylbenzoyl diphenylphosphine oxide, methyl phenylglyoxylate, 3-ketocoumarin, 2-ethylanthraquinone, camphaquinone, benzil, 9,10-phenanthrenequinone, dibenzosuberon, 2-ethylanthraquinone, 4',4"-diethylisophtalophenone, 3,3",4,4"-tetra (t-butylperoxycarbonyl) benzophenone, Michler's ketone, tetramethylthiuram monosulfide, 3,3',4,4'-tetra (t-butylperoxycarbonyl) benzophenone, acridine orange, benzoflavin, merocyanine, cyanine, iron-arene complex, mercaptobenzothiaoxazole N-allylglycine, tris(trichloromethyl)-S-triazine derivatives, bis-pentadienyl titanium-di pentafluorophenyl , etc. These are used alone or as a mixture of 2 or more thereof. According to the present invention, the amount of the polymerization initiator is 0.05 - 20 parts per weight, to 100 parts per weight of the ultraviolet curable resin composition. Also, a sensitizer may be used together with these polymerization initiators. The sensitizer serves to promote the reaction of the polymerization initiator, and may be arbitrarily selected according to the type of polymerization initiator used.

The carboxylic acid vinyl ester compound having at least two ethylene type unsaturated double bonds available for use in (b) may be, for example, a dicarboxylic acid divinyl ester such as divinyl oxalate, divinyl malonate, divinyl succinate, divinyl glutarate, divinyl adipate, divinyl pimelate, divinyl suberate, divinyl azelate, divinyl sebacate, divinyl maleate, divinyl isophtalate, and divinyl terephtalate, etc., or vinyl (meth )acrylate, vinyl crotonate, vinyl sorbinate, vinyl cinnamate or triallyl aconitate, etc. The amount of (b) according to the present invention is 0.5 - 2.0 parts per weight, to 100 parts per weight of (a). The present invention exhibits no significant effect at less than 0.5 parts per weight, and over 20 parts per weight is not desirable as the curability of the starting resin is sometimes impaired.

The resin composition used in (a) may contain any solvent, binder polymer, pigment, dye, polymerization inhibitor or additive which is in general use, so long as it does not hinder the curing. A solvent is sometimes added for adjustment of the viscosity at the time of application. It may be a volatile substance which may evaporate, or be left depending on the properties of the cured product. A binder polymer adjusts the viscosity of the resin and the properties of the cured product. Such a substance preferably is a polymer with a polymerization degree of 10 - 5000, or a binder polymer with a molecular weight of 10³ - 10⁶. The binder polymer itself may possess a radical polymerizable ethylene type unsaturated group in its molecule. Specific examples for use include resins such as acryl resins, polyester resins, alkyd resins, epoxy resins, polyvinyl resins, fluorocarbon resins, silicone resins, polyphenol resins, amino resins, polybutadiene resins, and polyurethane resins, etc., or their modified products, either alone or as a mixture of 2 or more arbitrarily selected thereof. The pigment used may be either an inorganic or an organic one. Also, the pigment may be used to supply functions of electroconductivity, magnetism, etc. The pigments may also serve to improve the quality of the surface, if necessary. The dye is mainly used for coloration, and may be added as desired as long as it does not hinder the curing. The polymerization inhibitor is added to prevent gelation due to a dark reaction during the production or storage. Specific examples for use include hydroquinone, nitrobenzene derivatives, p-methoxyphenol, di-t-butylcresol, p-benzoquinone, phenothiadine, t-butylcatechol and tocopherol, etc. The additives may be used as desired and as necessary, and include, for example, a leveling agent, defoaming agent, thixotropic agent, coupling agent, chelating agent, wax, anti-color separation agent, desiccant, thickener, anti-drip agent, anti-precipitation agent, ultraviolet absorber or plasticizer, etc. Further, any other reactive resin may be used provided that it does not inhibit the effect of the present invention. Other reactive resins include, for example, thermosetting resins, anaerobically curing resins and humidity curing resins, etc., and these may be reacted before or after ultraviolet irradiation.

Any kneading method may be used to produce an ultraviolet curable resin composition according to the present invention, for example, a 3-roll, ball mill, automatic mortar, mixer, shaker, homogenizer, or kneader, etc.

An ultraviolet curable resin composition according to the present invention may be applied as a paint or ink onto a variety of substrates, and is particularly effective for polyethyleneterephthalate, polyimide, PPS, etc. which are poor-adhesion plastics heretofore having required an anchor coat. The surfaces of these substrates may be washed with a solvent such as ethanol, or trichloroethane, etc. for further improvement of the effect. Obvious applications will also be seen for surface treatments, such as, for example, corona electric discharge and other treatments, as well as for oven heat treatment, etc.

An ultraviolet curable resin composition according to the present invention is particularly preferable in fields which employ poor-adhesion plastics as substrates. For example, it may be used as a material for electronic parts, such as resists for print wiring substrates, overcoating agents, part binding agents, resistors, spacers, etc. Also, new functions may be added thereto by incorporating a functional filler therein. For example, through the incorporation of silver dust, copper dust, nickel dust, carbon, etc. it may be used as an electroconductive paste, an anti-static paint, or a radio shielding paint. Further, by incorporating magnetic dust therein, it may be used as a magnetic paint. It is also desirable as a paint for packing materials, and can be used as an ink for PET bottles. In addition to these uses, it may be used in any case where adhesion is required.

An ultraviolet curable resin composition according to the present invention may be cured with any type of generally used light source including, for example, sunlight, mercury lamps, metal halide lamps, mercury xenon lamps, non-electrode lamps, xenon flash lamps, and lasers, etc. The irradiation of these light sources may be carried out with the application of heat and/or under reduced pressure. Further, the curing may be done with an active energy beam containing an electron beam generally used for the curing of ultraviolet curable resin. When curing with an electron beam, the polymerization initiator may not be necessary. Also, the curing process may be effected with the application of heat before or after the process of ultraviolet irradiation.

An ultraviolet curable paint according to the present invention may be used by any method of application, such methods including, for example, bar coating, spray coating, curtain coating, roll coating, screen printing, offset printing, and gravure printing, etc., depending on the use desired. Also, the thickness of the cured film depends on the properties of the resin (a) and the irradiation light source, and may be freely selected according to the use.

## Claims

1. An ultraviolet curable resin composition characterized by incorporating (a) 100 parts by weight of a resin composition which undergoes radical polymerization under ultraviolet light to form a cured substance said composition (a) comprising polybutadiene (meth)acrylate and a polymerization initiator, and (b) 0.5 - 20 parts by weight of a carboxylic acid vinyl ester compound having at least 2 ethylenically unsaturated double bonds.

2. The composition according to claim 1, wherein (b) the carboxylic acid vinyl ester compound is the divinyl ester of a dicarboxylic acid.

## Patentansprüche

1. Durch Ultraviolettstrahlung härtbare Harzzusammensetzung, dadurch gekennzeichnet, daß sie (a) 100 Gew.-Teile einer Harzzusammensetzung, die unter Ultraviolettlicht der radikalischen Polymerisation unter Bildung einer gehärteten Substanz unterliegt, wobei die Zusammensetzung (a) Polybutadien(meth)acrylat und einen Polymerisationsinitiator umfaßt, und (b) 0,5 bis 20 Gew.-Teile einer Carbonsäure-vinylesterverbindung mit mindestens 2 ethylenisch ungesättigten Doppelbindungen enthält.

2. Zusammensetzung nach Anspruch 1, wobei (b) die Carbonsäure-vinylesterverbindung der Divinylester einer Dicarbonsäure ist.

## Revendications

1. Composition de résine durcissable par les ultraviolets, caractérisée par l'introduction de (a) 100 parties en poids d'une composition de résine qui subit une polymérisation radicalaire sous la lumière ultraviolette pour former une substance durcie, ladite composition de résine (a) comprenant du poly(méth)acrylate de butadiène et un initiateur de polymérisation, et (b) 0,5 - 20 parties en poids d'un composé ester vinylique d'acide carboxylique ayant au moins 2 double liaisons insaturées éthyléniquement.

2. Composition selon la revendication 1, caractérisée en ce que le composé ester vinylique d'acide carboxylique (b) est l'ester divinylique d'un acide dicarboxylique.
